# EUROPEAN PATENT APPLICATION

(11) **EP 1 427 125 A2**
(43) Date of publication of application: **09.06.2004**
(21) Application number: 03252755.8
(22) Date of filing: 01.05.2003
(51) Int. Cl.: H04J 14/08, H04L 7/02

(54) **Optical pulse separation method and device**

(30) Priority: 06.12.2002 JP 2002354776
(71) Applicant: Communications Research Laboratory, Independent Administrative Institution, Koganei-Shi, Tokyo (JP)
(72) Inventor: Miyazaki, Tetsuya, c/o Communications Res. Lab., Koganei-shi, Tokyo (JP)
(74) Representative: Turner, James Arthur

(57) **Abstract**

It is an object of the present invention to perform optical pulse separation that employs a clock recovery method that does not necessitate a complex constitution and by means of which operation is stable even during high-speed operation in excess of 160 Gbit/s. Hence, the clock signal required in the optical pulse separation is extracted by means of a clock recovery stage (100). The clock recovery stage is constituted by an O/E converter (106) that has a reception bandwidth enabling a clock frequency signal to be received, a phase-locked loop (110) for obtaining a recovered clock signal in which the jitter of the time division multiplexed optical signal is faithfully reproduced, an electrical phase delay circuit (120), and a high Q value bandpass filter (124), and the like. The time division multiplexed optical signal is received by the O/E converter and O/E converted thereby. The O/E converted electrical signal is supplied to the phase-locked loop. Thus, the clock signal contained in the time division multiplexed optical signal is extracted by the clock recovery stage which comprises the O/E converter and the phase-locked loop.

## Description

The present invention relates to a method for extracting a clock signal in optical time division multiplexing, and relates to an optical time division multiplexing device that employs this clock signal extraction method.

Optical time division multiplexing (OTDM) is a communication mode in which a plurality of optical pulse signals modulated by different information signals (referred to hereinafter as 'tributary channels') of the same base modulation rate (also known as 'base rate') are time-division multiplexed on a temporal axis, transmitted as a time division multiplexed optical signal, and then received and demodulated one by one as individual tributary channels on the receiver side. In other words, this is a communication mode that adopts a method according to which a plurality of tributary channels having an equal modulation rate are combined on a temporal axis after assigning phase delays in correspondence with the tributary channels, whereby a time division multiplexed optical signal is obtained and then transmitted, and according to which, on the receiver side, optical pulse signals that correspond with all of the transmitted tributary channels are separated from the time division multiplexed optical signal.

A signal which is the time base of the tributary channel base rate is known as a base rate clock (referred to hereinafter simply as the 'clock'). On the receiver side, in order to perform reception and demodulation for every tributary channel, the clock signal used on the transmitter side must be extracted and recovered from the time division multiplexed optical signal in the course of the optical pulse separation. That is, a technique for extracting and recovering the clock signal from the time division multiplexed optical pulse signal (also known hereinafter as 'clock recovery') is required.

As a clock recovery method, a method that employs a phase-locked loop equipped with an ultra fast optical phase comparator that uses an optical switch has been proposed (see nonpatent publications 1, 2 and 3, for example).

Further, if an all optical injection locking clock recovery scheme is adopted, a direct optical base rate clock can be obtained (see nonpatent publications 4 and 5, for example).

### (Nonpatent publication 1)

R. Ludwig et al. "Enabling transmission at 160 Gbit/s" in Tech. Dig. OFC' 2002, TuA.

### (Nonpatent publication 2)

T. Yamamoto et al. "Clock recovery from 160 Gbit/s data signals using phase-locked loop with interferometric optical switch based on semiconductor optical amplifier", Electronics Letters, April 2001, vol. 37 No.8, pp. 509-510.

### (Nonpatent publication 3)

D. T. K. Tong et al. "160 Gbit/s clock recovery using electroabsorption modulator-based phase-locked loop", Electronics Letters, Nov. 2000, vol. 36 No. 23, pp. 1951-1952.

### (Nonpatent publication 4)

C. Bornholdt et al. "Application of a 80 GHz all-optical clock in a 160 km transmission experiment", in Tech, Dig. of OFC 2002, TuN6.

### (Nonpatent publication 5)

T. Miyazaki et al. "Optical sampling and demultiplexing of 80 Gb/s OTDM signals with optically recovered clock by injection mode-locked laser diode", in Tech. Dig. of ECOC 02 2.1.6 2002.

However, the above-described method that employs a phase-locked loop requires an ultra fast optical gate switch in addition to a switch for optical pulse separation, and hence the constitution becomes complex. Further, in cases where an all optical injection locking clock recovery scheme is adopted, there is the problem posed by the process of implementing an operation which is stable during high-speed operation at 160 Gbit/s or more.

Various respective aspects and features of the invention are defined in the appended claims. Features from the dependent claims may be combined with features of the independent claims as appropriate and not merely as explicitly set out in the claims.

Accordingly, embodiments of the invention can provide an optical pulse separation method that uses an optical clock signal extraction method and an optical pulse separation device capable of employing this method that do not necessitate a complex constitution, and by means of which operation is stable even during high-speed operation in excess of 160 Gbit/s.

According to the optical pulse separation method of this invention, a plurality of optical pulse signals modulated by different information signals (tributary channels) having the same base modulation rate are time-division multiplexed on a temporal axis, transmitted as a time division multiplexed optical signal, and then received and demodulated one by one as individual tributary channels on the receiver side by using a recovered clock signal which is extracted from the time division multiplexed optical signal; for this purpose, the following steps feature in the execution of the optical pulse separation method, namely:
(a) obtaining a first electrical signal by optical-to-electrical (O/E) converting the time division multiplexed optical signal in order to extract the recovered clock signal from the time division multiplexed optical signal;
(b) obtaining a second electrical signal from which a clock signal, in which the jitter of the time division multiplexed optical signal is faithfully reproduced, is recovered; and
(c) outputting an electrical recovered clock signal which is phase-locked to a tributary channel, with respect to the second electrical signal.

'Jitter' signifies deviations in the arrival time of the optical pulses of the time division multiplexed optical signal that has arrived at the receiver side. By recovering a clock signal in which the jitter is faithfully reproduced, even if jitter is present, error-free optical pulse separation can be performed by means of the recovered clock signal.

Further, in order to implement the above-described optical pulse separation method, an optical pulse separation device that is characterized by having the following constitution is adopted. In other words, the device comprises a first O/E converter, a first electrical amplifier, a phase-locked loop, and a tunable electrical phase delay circuit. In order to extract a recovered clock signal from a time division multiplexed optical signal produced by time division multiplexing, on a temporal axis, a plurality of optical pulse signals which are modulated by different information signals having the same base modulation rate, the first O/E converter O/E converts the time division multiplexed optical signal such that same is extracted as a first electrical signal. The first electrical amplifier stabilizes the strength of the first electrical signal and then supplies same to the phase-locked loop. The first electrical amplifier is also referred to hereinafter as the 'output stabilizing electrical amplifier' in order to express the function of this first electrical amplifier. The phase-locked loop then generates a second electrical signal so as to enable a clock signal, in which the jitter of the time division multiplexed optical signal is faithfully reproduced, to be recovered.

The tunable electrical phase delay circuit outputs an electrical recovered clock signal, which is phase-locked to a tributary channel, to the optical pulse separation stage with respect to the second electrical signal.

According to the above-described optical pulse separation method and the optical pulse separation device of the invention, an ultra fast optical gate is not required in the extraction of the clock signal. The regulation of the optical spectrum in order to intentionally leave behind the clock frequency component is also not required. Further, because an interferometer or any other high-speed electrical constituent element is not necessary, a complex constitution is not needed and hence stable operation even at speeds in excess of 160 Gbit/s can be achieved.

Further, in the optical pulse separation method of this invention, when the time division multiplexed optical signal is separated into tributary-channel optical pulse signals, the following steps are preferably also included:
(d) supplying an electrical recovered clock signal to a first mode locked laser diode;
(e) generating an optical recovered clock signal from the first mode locked laser diode in response to this electrical recovered clock signal; and
(f) supplying this optical recovered clock signal to an optical switch as an optical control pulse to separate the time division multiplexed optical signal into tributary-channel optical pulse signals.

Further, in the optical pulse separation method of this invention, it is possible to adopt an optical pulse separation device characterized by having the constitution below in order to implement the method for separating the time division multiplexed optical signal into tributary-channel optical pulse signals. That is, such a device comprises a first mode locked laser diode and an optical switch. The first mode locked laser diode receives the electrical recovered clock signal and thereby generates an optical recovered clock signal, i.e. an optical clock pulse. The optical switch receives this optical recovered clock signal and then separates tributary-channel optical pulse signals from the time division multiplexed optical signal.

In the above-described optical pulse separation method of this invention, according to the method for separating the time division multiplexed optical signal into tributary-channel optical pulse signals and the above-described device that implements this method, an optical recovered clock signal is generated by the first mode locked laser diode in response to the electrical recovered clock signal outputted from the tunable electrical phase delay circuit. Optical pulse separation is thus implemented by supplying this optical recovered clock signal to the optical switch as an optical control pulse.

Further, in cases where an electrical recovered clock signal is obtained in order that the time division multiplexed optical signal should be separated into tributary-channel optical pulse signals by using the recovered clock signal which is extracted from this time division multiplexed optical signal, the following steps are preferably included, namely,
(a1) extracting a first electrical signal by using the first O/E converter to receive and O/E convert the time division multiplexed optical signal, and supplying the first electrical signal obtained by this O/E conversion to the output stabilizing electrical amplifier so that this signal is amplified thereby;
(b1) causing a second electrical signal to be outputted by a phase-locked loop to enable a clock signal, in which the jitter of the time division multiplexed optical signal is faithfully reproduced, to be recovered from the first electrical signal thus amplified;
(c1) supplying the second electrical signal to a tunable electrical phase delay circuit so that the second electrical signal is outputted as an electrical recovered clock signal which is phase-locked to a tributary channel; and
(c2) supplying this electrical recovered clock signal to a second electrical amplifier so that this signal is amplified thereby, and filtering the amplified signal by means of an electrical bandpass filter that has a bandwidth whose value, which is derived by dividing the center frequency passed thereby by the half width, is 500 or more, to obtain a filtered electrical recovered clock signal.

Also, the following elements are preferably included when a device that implements the above-described optical pulse separation method is constructed. In other words, the constitution comprises: an output stabilizing electrical amplifier; a second electrical amplifier; and an electrical bandpass filter that has a bandwidth whose value, which is derived by dividing the center frequency passed thereby by the half width, is 500 or more. The frequency of the time division multiplexed optical signal is a bit rate frequency that is a multiple of the number of multiplexed channels of a tributary-channel bit rate. The output stabilizing electrical amplifier stabilizes the strength of the first electrical signal and supplies this signal to the phase-locked loop. The second electrical amplifier amplifies the electrical recovered clock signal. The electrical bandpass filter receives and filters the amplified recovered clock signal to generate a filtered electrical recovered clock signal.

According to the method and device for obtaining an electrical recovered clock signal of the above-described optical pulse separation method and optical pulse separation device of this invention, an electrical recovered clock signal can be obtained which is required for optical pulse separation and optical sampling, as well as for observation of the bit error rate.

The invention will now be described by way of example with reference to the accompanying drawings, throughout which like parts are referred to by like references, and in which:
Fig. 1 serves to describe the operation of the time division multiplexing device;
Fig. 2 serves to describe the operation of a transmitter section;
Fig. 3 serves to describe the operation of a transmission portion comprising a dispersion compensating circuit;
Fig. 4 serves to describe the operation of the optical pulse separation device;
Fig. 5 serves to describe the operation of an optical sampling system;
Fig. 6 shows the optical spectrum of the time division multiplexed optical signal;
Fig. 7 shows the spectrum of the output signal of the first mode locked laser diode;
Fig. 8 (drawn as Figs. 8(a) and 8(b)) shows the bit error rates of tributary channels; and
Fig. 9 (drawn as Figs. 9 (a) to 9(c)) shows eye diagrams based on optical sampling observation.

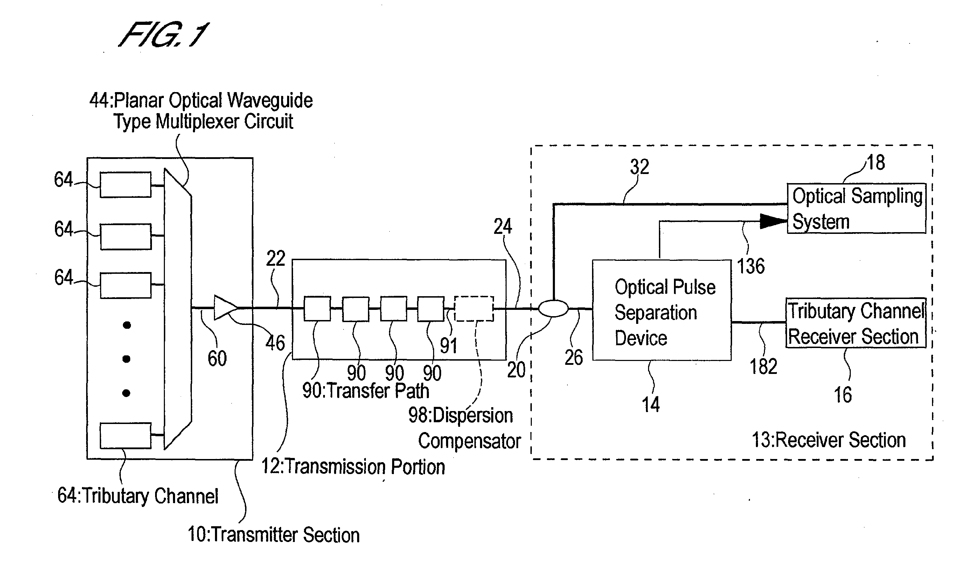

Embodiments of this invention will be described below with reference to Figs. 1 to 9(c). The figures illustrate a constitutional example related to this invention, and merely serve to show in outline the positional relationships of the constituent elements and so forth so as to permit an understanding of this invention, the invention not being limited to or by the illustrated example. Further, in the description that follows, although specific instruments and conditions and so forth are sometimes employed, these materials and conditions simply constitute one preferred example, and the invention is therefore not limited to or by any of such materials and conditions. Further, in the drawings, the same reference numerals are shown assigned to the same constituent elements, and hence repetitive descriptions will also be omitted.

In the drawings that follow, an optical signal path such as an optical fiber is indicated by a heavy line, while an electric signal path is denoted by a narrow line. Furthermore, the numerals and symbols which have been assigned to these heavy lines and narrow lines signify optical signals or electrical signals respectively.

### The optical pulse separation method and the constitution of the optical pulse separation device employing this method

A description will be provided for the overall constitution of the optical time division multiplexing device of this invention with reference to Fig. 1. The optical time division multiplexing device comprises a transmitter section 10, a transmission portion 12, and a receiver section 13. The transmitter section 10 comprises parts 64 for generating optical pulse signals and a part 44 for mixing the optical pulse signals. The transmission portion 12 comprises transfer paths 90 each constituted by an optical fiber and a part 98 that possesses a dispersion compensating function. The receiver section 13 comprises an optical pulse separation device 14.

### Transmitter section

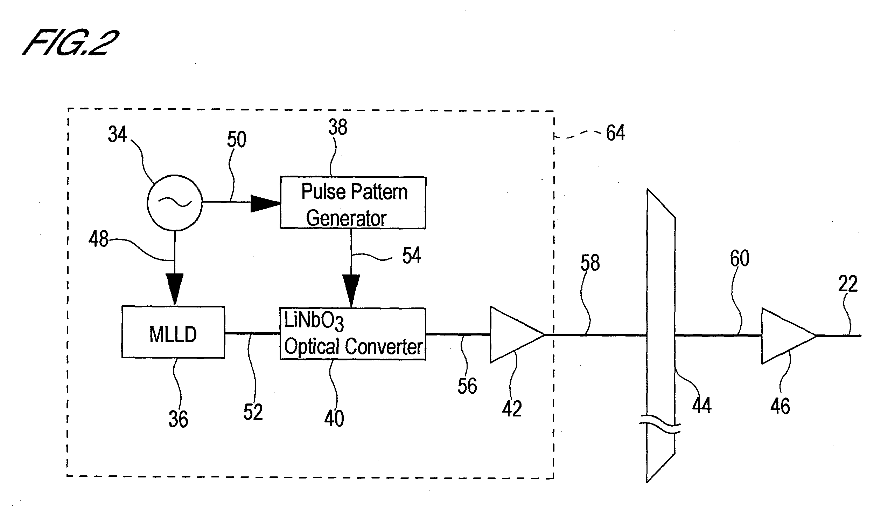

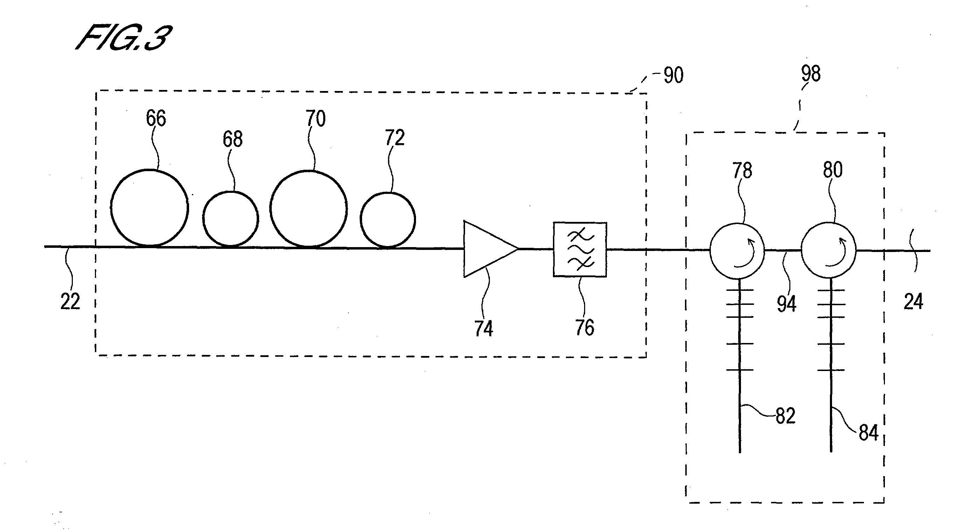

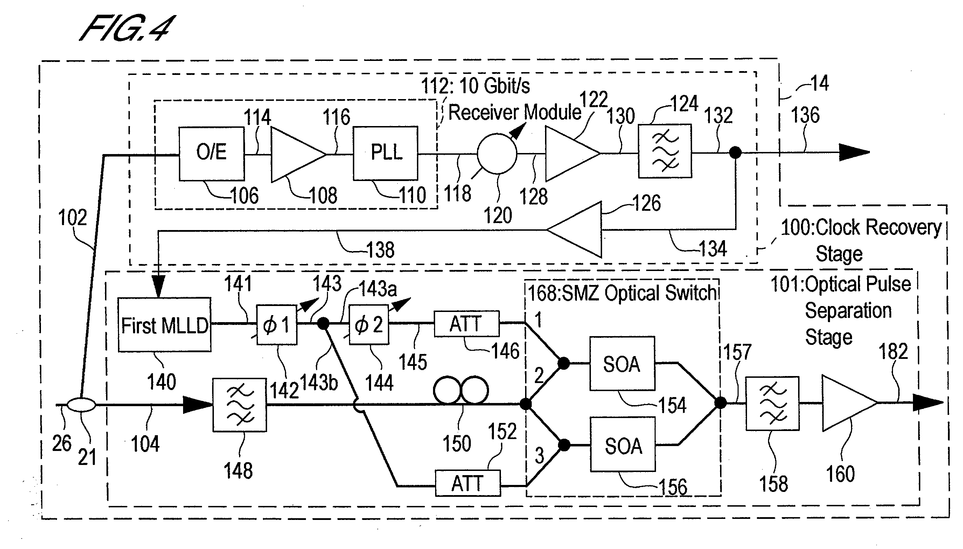

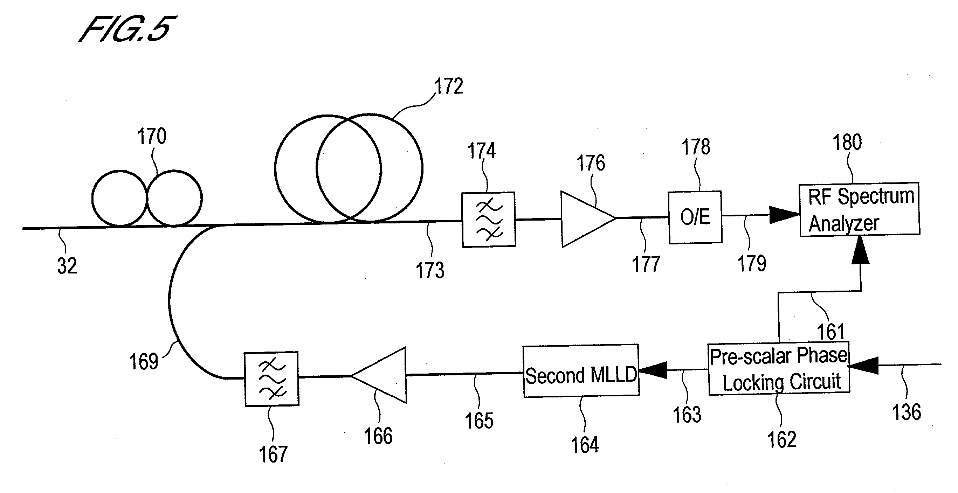

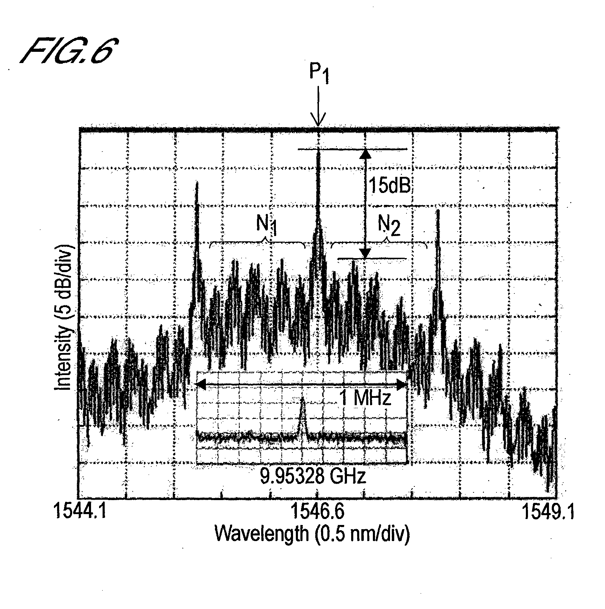

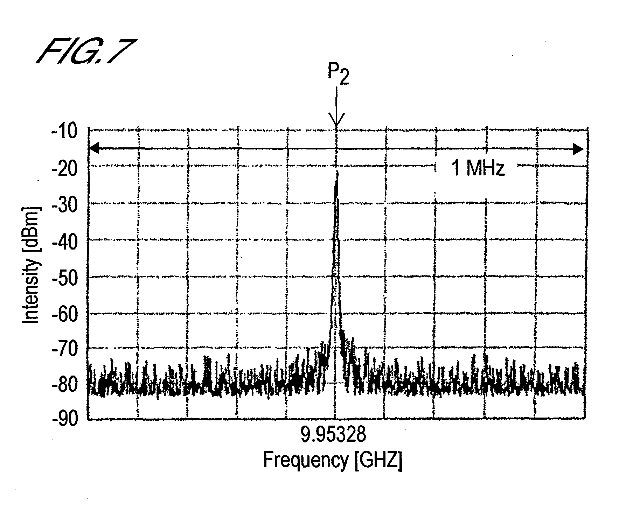

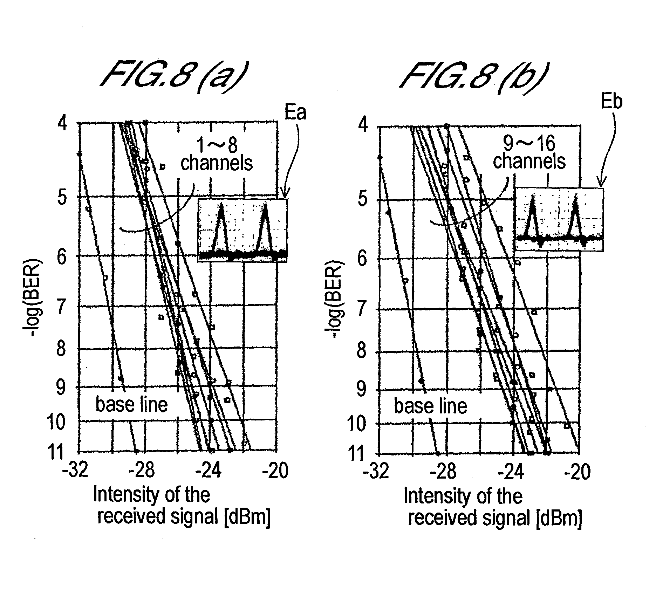

The constitution and operation of the transmitter section 10 will now be described with reference to Fig. 2. A 10-GHz (accurately speaking, this is 9.95328 GHz but will be written as 10 GHz hereinafter for the sake of simplicity) repetitive optical pulse signal is generated by a mode locked laser diode (MLLD) 36. The oscillation wavelength of the MLLD 36 is 1560 nm. In order to distinguish the MLLD of the same kind which is provided in the receiver section 13, this MLLD 36 will be expressly described as the transmitter side MLLD 36. The optical output pulse is modulated by means of a 10 Gbit/s (a 27-1 bit PRBS (Pseudo Random Binary Sequence) signal) signal by a LiNb0₃ optical converter 40. The 10 Gbit/s optical output pulses are time division multiplexed by a planar optical waveguide type multiplexer circuit 44 to generate a 160 Gbit/s time division multiplexed optical signal. Similarly to the above-described '10 GHz' description, this is strictly speaking not 160 Gbit/s but is written as 160 Gbit/s for the sake of simplicity.

The relationship of the bit rate of the time division multiplexed optical signal is such that same is equal to a multiple of the number of multiplexed channels of a tributary-channel bit rate. In this embodiment, the bit rate of the time division multiplexed optical signal is 160 Gbit/s, while the tributary-channel bit rate is 10 Gbit/s. Further, the number of multiplexed channels is generally a power of the integer 2, that is, 2, 4, 8, 16, 32, and so forth, there being sixteen channels in the present embodiment.

The process by which this 160 Gbit/s time division multiplexed optical signal is generated will now be described in a little more detail. 10 GHz electrical clock signals, that is, base rate clock signals 48 and 50, are supplied from the signal generator 34 to the transmitter side MLLD 36 and to a pulse pattern generator 38. Subsequently, where cases are equivocal, a case where the clock signal is present in the form of an electrical pulse signal is discriminately written as an electrical clock signal and a case where the clock signal is present in the form of an optical pulse signal is discriminately written as an optical clock signal. The transmitter side MLLD 36 is driven by an electrical clock signal 48, thereby generating a 10 GHz optical pulse train 52. This pulse train 52 enters the LiNbO₃ optical converter 40.

Meanwhile, an electric clock signal 50 is supplied from the signal generator 34 to the pulse pattern generator 38. The pulse pattern generator 38 generates an electrical modulation signal 54 which is synchronized with the electrical clock signal 50 thus supplied, and supplies this electrical modulation signal 54 to the LiNb0₃ optical converter 40. Once supplied with the electrical modulation signal 54, the LiNb0₃ optical converter 40 modulates the 10 GHz optical pulse train 52 which has been inputted thereto by means of the 10 Gbit/s signal 54.

The incidences of '1' and '0' correspondence in the PRBS signal are substantially the same, one cycle of the PRBS signal being equal to 2N-1 bits. With regard to the bits in a cycle, all combinations are generated randomly with the exception of incidences of N consecutive '0's. For example, a 2^{N}-1 bit PRBS signal is generated by a circuit constituted by circuit of N shift registers and EXOR gates.

A 10 Gbit/s optical pulse signal 56, which is an optical pulse signal 58 that has been amplified by the optical fiber amplifier 42, is sent to the planar optical waveguide type multiplexer circuit 44 and is converted to a time division multiplexed optical signal 60 by the multiplexer circuit 44. The optical fiber amplifier 42 is an optical fiber doped with a rare earth metal such as Er (EDFA: Er-doped optical fiber amplifier) , and performs the function of amplifying the light propagated thereby. This optical fiber amplifier 42 will subsequently also be referred to simply as the 'optical amplifier'. Further, in additional places, 'optical fiber amplifier' as in optical fiber amplifier 42' is used hereinafter but there will also be cases where this is rendered as 'optical amplifier' and discriminated using 'first' or 'second' as is also the case for 'optical fiber amplifier' used on such occasions.

The time division multiplexed optical signal 60 is a time division multiplexed optical signal 22 which has been amplified by the optical amplifier 46, and this amplified time division multiplexed optical signal 22 is sent to the transmission portion 12 (see Fig. 1) . Subsequently, the optical pulse signals 58 will also be referred to as 'tributary-channel' optical pulse signals. That is, the 'tributary channels' are also 'individual channels' for individual optical pulse signals, or are 'pre-multiplexing channels'. Further, these tributary channels also denote 'separated channels' since optical pulse signals which are the same as the optical pulse signals 58 are obtained as a result of the optical pulse separation on the receiver side.

The transmitter section 10 shown in Fig. 1 has sixteen channels' worth of the tributary channels (in the embodiment, the bit rate is 10 Gbit/s) 64 described in Fig. 2. These optical pulse signals 58 spanning sixteen channels are multiplexed in the planar optical waveguide type multiplexer circuit 44 to produce the time division multiplexed optical signal 60. The time division multiplexed optical signal 60 is therefore a 160 Gbit/s optical pulse signal. Furthermore, in order that the time division multiplexed optical signal 60 be sent so as to permit reliable separation into adjacent tributary-channel optical pulse signals, the optical signals are time division multiplexed by applying an offset delay interval (substantially 200 ps) to each arm of the planar optical waveguide type multiplexer device 44 (optical waveguides (not illustrated) for imparting a delay which are provided in correspondence with the tributary channels) . A 160 Gbit/s time division multiplexed optical signal 60 which is time division multiplexed in this manner is thus generated. The time division multiplexed optical signal 60 will subsequently also be referred to as the '160 Gbit/s OTDM signal'.

In experiments to confirm the operation of the optical time division multiplexing device of this invention, a PRBS signal is used as described earlier as the time division multiplexed optical signal pulse. When the optical time division multiplexing device is actually operated and used as such, a signal which reflects specific information which the user wishes to send is equivalent to this PRBS signal. That is, so long as the operation of the optical time division multiplexing device of this invention can be confirmed by using this PRBS signal, there are also no problems in the practical application of the device and the operation thereof can be confirmed. The process whereby the operation of the optical time division multiplexing device of this invention is confirmed through experimentation by using the PRBS signal will be described subsequently.

### Transmitter Portion

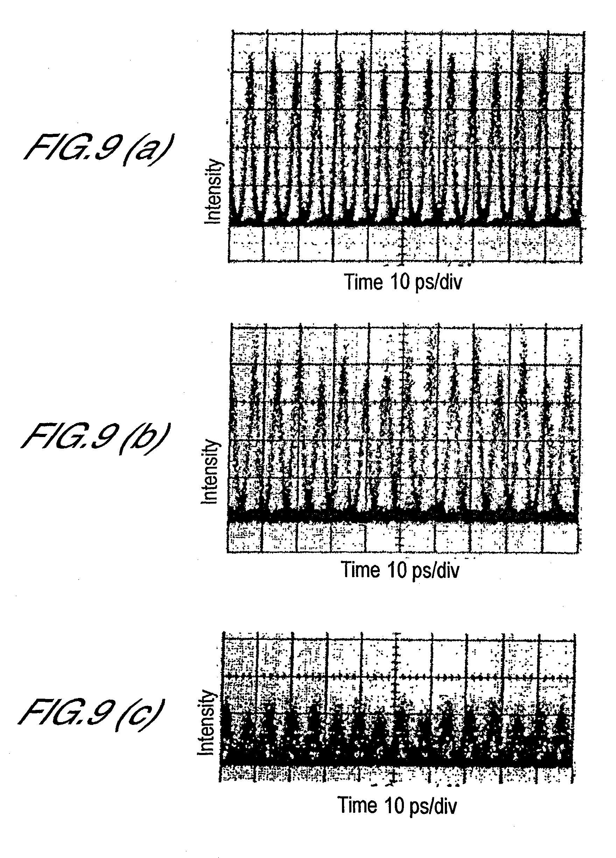

The constitution of the transmission portion 12 and the operation thereof will be described next with reference to Fig. 3. A 320 km long distance transmission line is used as the transmission portion 12 in this embodiment assuming that such a transmission line is available for practical usage. The transmission portion 12 is constituted by a transmission path comprising four segments of 80 km each, and each segment 90 is constructed by connecting single mode fibers (a set of two 66, 70: two Furukawa SMF-E 29-km fibers), reverse dispersion fibers (a set of two 68, 72: two Furukawa RDF-45E 11-km fibers), an optical amplifier 74 and an optical bandpass filter 76 in the transmission path. That is, the transmission portion 12 comprises four serially connected segments of 80 km each and is 320 km in length.

After passing via the transmission path comprising four serially connected segments 90, the residual accumulated dispersion and the residual accumulated dispersion slope which are attributable to the transmission-path wavelength dispersion (that is, a large number of delay interval differences for each unit wavelength change) and the dispersion slope (that is, the amount of variation in the wavelength dispersion for each unit wavelength) and which remain in the signal light 91 (see Fig. 1) are also dispersion-compensated by a dispersion compensator 98 with a cascade structure that combines a variable dispersion equalizer and a dispersion slope compensator. The variable dispersion equalizer and dispersion slope compensator are constituted using optical fibers (82 and 84) with a diffraction grating in which the cyclical structure of the refractive index is chirped, and optical circulators (78 and 80), and the like. The dispersion compensator 98 with a cascade structure that combines a variable dispersion equalizer and a dispersion slope compensator is designed to exhibit a preference for 160 Gbit/s RZ (Return to Zero) modulation signals. The residual accumulated dispersion and the residual accumulated dispersion slope with respect to light with a wavelength of 1546.6 nm (the wavelength of the optical pulse signal) are 0 ps/nm and 0 ps/nm² respectively.

### Receiver section

A description will be provided for the constitution and operation of the optical pulse separation device 14 (see Fig. 1) which is provided in the receiver section 13, with reference to Fig 4. The characterizing feature of the invention lies with the optical pulse separation device 14 and, more particularly, with the clock recovery stage 100. Fig. 4 is a block diagram showing the constitution of the optical pulse separation device 14 in detail. The 160 Gbit/s OTDM signal 26, which is propagated by the transmission portion 12 (see Fig. 1) and then split by a branching filter 20, is split by an optical branching filter 21 (See Fig. 4) into a signal 102 which is guided to a clock recovery stage 100 and a signal 104 which is guided to an optical pulse separation stage 101.

The optical pulse separation stage 101 splits the time division multiplexed optical signal which is sent thereto into optical pulse signals of individual channels. In other words, optical pulse separation is performed by the optical pulse separation stage 101 by means of the optical recovered clock signal. This optical recovered clock signal is also known as an optical clock pulse. The clock recovery stage 100, which serves to generate the optical recovered clock signal, converts the recovered clock signal extracted from the time division multiplexed optical signal into an electrical recovered clock signal and then sends this signal to the optical pulse separation stage 101. The clock recovery stage 100 and the optical pulse separation stage 101 will be described specifically below.

The clock recovery stage 100 comprises a 10 Gbit/s receiver module 112. In other words, the receiver module 112 has a reception bandwidth that is sufficient to receive a 10 Gbit/s RZ modulation signal. The receiver module 112 is constituted by an O/E (optical-to-electrical) converter 106, a first electrical amplifier 108 and a phase-locked loop (also abbreviated to 'PLL' hereinafter) 110, for example. The O/E converter 106 uses a photodiode that has a reception bandwidth allowing a clock frequency signal to be received. That is, a photodiode having a bandwidth that is sufficient to receive a 10 Gbit/s RZ modulation signal is employed. The first electrical amplifier 108 possesses the function of stabilizing the strength of the first electrical signal which is obtained through the O/E conversion performed by the O/E converter 106 and is constituted by a preamplifier and a limiter amplifier. This first electrical amplifier 108 is also referred to subsequently as the 'output stabilizing electrical amplifier 108'.

In addition to the receiver module 112, the clock recovery stage 100 preferably further comprises a tunable electrical phase delay circuit 120; an electrical amplifier 122; a high Q value bandpass filter 124 that has a bandwidth whose value, which is derived by dividing the center frequency passed thereby by the half width, is 500 or more; and an electrical amplifier 126. In the present embodiment, the high Q value bandpass filter has a 20 MHz 3-db bandwidth at 10 GHz.

In other words, the clock recovery stage 100 is constituted comprising the O/E converter 106, the output stabilizing electrical amplifier 108, the phase-locked loop 110, the tunable electrical phase delay circuit 120, and the electrical bandpass filter 124 as the main constituent elements.

A time division multiplexed optical signal 102 is received by the O/E converter 106 that has a reception bandwidth allowing a clock frequency signal to be received. In such a constitution, the clock recovery stage 100 ultimately generates an electrical recovered clock signal 132 from the inputted time division multiplexed optical signal 102. A description follows regarding the generation of the electrical recovered clock signal 132.

The O/E converter 106 extracts a recovered clock signal from the time division multiplexed optical signal 102 as a first electrical signal 114.

The first electrical signal 114 is inputted to the output stabilizing electrical amplifier 108. The first electrical signal 114 whose strength is thus stabilized by the output stabilizing electrical amplifier 108 then becomes the electrical signal 116 and is inputted to the phase-locked loop 110. The phase-locked loop 110 generates a second electrical signal 118 by regulating the phase of the first electrical signal 114 so that the clock signal, in which the jitter of the time division multiplexed optical signal is faithfully reproduced, can be recovered. The second electrical signal 118 is accordingly outputted from the receiver module 112. The second electrical signal 118 is then inputted to the tunable electrical phase delay circuit 120. The tunable electrical phase delay circuit 120 outputs an electrical recovered clock signal 128, which is locked to the phase of the tributary channel, with respect to the second electrical signal 118.

The electrical recovered clock signal 128 thus outputted from the tunable electrical phase delay circuit 120 is an electrical signal 130 which is then amplified by the second electrical amplifier 122, and passes through the electrical bandpass filter 124, whereby an electrical recovered clock signal 132 with a 20 MHz half width at 10 GHz is generated.

Thus, the time division multiplexed optical signal 102 is inputted to the clock recovery stage 100, whereupon the electrical recovered clock signal 132 is generated from this time division multiplexed optical signal 102. The electrical recovered clock signal 132 is split into an electrical recovered clock signal 136, which is supplied to an optical sampling system 18 (see Fig. 1) , and a signal 134, which is supplied to a first mode locked laser diode (MLLD) 140. The signal 134 is an electrical recovered clock signal 138 which is then amplified by the electrical amplifier 126 and supplied to the first mode locked laser diode 140.

Further, the electrical signal 138 supplied to the first mode locked laser diode 140 is a signal (electrical recovered clock signal) which is obtained through amplification by the electrical amplifier 126 in order to ensure the stable operation of the first mode locked laser diode 140.

Meanwhile, an electrical recovered clock signal 136 which is extracted by the clock recovery stage 100 is supplied to the optical sampling system 18. Then, this signal is regulated by the tunable electrical phase delay circuit 120 in order to minimize the jitter noise level of the output from the first mode locked laser diode 140, while this signal is monitored by the optical sampling system 18.

The first mode locked laser diode 140 receives the electrical signal 138 and then generates an optical clock pulse 141 in order to control a Symmetric Mach-Zehnder (SMZ) optical switch 168 that is provided in the next stage. The Symmetric Mach-Zehnder (SMZ) optical switch 168 will also be abbreviated subsequently to 'SMZ 168'.

As shown in Fig. 4, the optical pulse separation stage 101, which serves to perform the optical pulse separation whereby the time division multiplexed optical signal is restored to the original juxtaposed optical pulse signals, is constituted comprising the first mode locked laser diode 140 and the SMZ 168 as main constituent elements.

The first mode locked laser diode 140 is a mode locked laser diode that generates an optical pulse with a wavelength of 1555 nm and a pulse width of 1.5 ps. The optical clock pulse 141 from the first mode locked laser diode 140 is supplied to the SMZ 168 for the purpose of optical pulse separation.

The optical clock pulse 141 which is synchronized with the recovered clock signal is supplied from the first mode locked laser diode 140 driven by the electrical recovered clock signal 138 to a tunable optical delay line (ø1) 142. The optical clock pulse 141 then receives a phase delay of a required amount and is outputted by the tunable optical delay line (ø1) 142 as an output signal 143. The output signal 143 is split (the optical branching filter for this division is omitted from the drawing) into a first signal (first separated signal) 143a and a second signal (second separated signal) 143b.

The first signal 143a is inputted to a tunable optical delay line (Ø2) 144 in which same receives the required phase delay, and is then inputted as the output signal 145 to the first input port of the SMZ 168 via an attenuator (ATT) 146. Meanwhile, the second signal 143b is inputted to the third input port of the SMZ 168 via an ATT 152. Further, the 160 Gbit/s OTDM signal 26 is split by the optical branching filter 21 to render a 160 Gbit/s OTDM signal 104 which is inputted to the second input port of the SMZ 168 via the optical bandpass filter 148 and a phase regulating circuit 150. The SMZ 168 is constituted comprising two semiconductor optical amplifiers SOA 154 and SOA 156, and the 160 Gbit/s OTDM signal 104 is separated by means of the above-described signals which were inputted to the first and third input ports, whereby an optical pulse signal 157 which is a tributary channel signal is separated from this OTDM signal 104.

As described above, the optical pulse separation device 14 of this invention is constituted comprising a clock recovery stage 100, and an optical pulse separation stage 101 that comprises the first mode locked laser diode 140 and the Symmetric Mach-Zehnder optical switch 168. The first mode locked laser diode 140 receives an electrical recovered clock signal and thus generates an optical recovered clock signal, that is, the optical clock pulse 141, while the optical switch 168 is constituted to receive the optical clock pulse 141 and separate the time division multiplexed optical signal into a tributary-channel optical pulse signal 157.

The 10 Gbit/s optical pulse signal 157 which has been thus separated is filtered by a 5-nm bandpass filter (optical bandpass filter) 158. The filtered optical pulse signal is amplified by an optical amplifier 160, and the amplified optical pulse signal 182 is introduced to a tributary channel receiver section 16 (see Fig. 1). The tributary channel receiver section 16 comprises an optical preamplifier, an optical bandpass filter, and a 10 Gbit/s receiver module as main constituent elements.

The optical input power to the SMZ 168 switch of the 160 Gbit/s OTDM signal at the second input port 2 of the SMZ 168 is 2 dBm, and the power of the optical control pulse to the first input port 1 and the third input port 3 of the SMZ 168 is 11 dBm and 13 dBm respectively.

ATT 146 and ATT 152 are inserted in order to suppress the power of the optical pulse that enters the first input port 1 and the third input port 3 of the SMZ 168. The tunable optical delay line (ø1) 142 and the tunable optical delay line (ø2) 144 function to select the tributary channel and to regulate the width of the gate switch window. The regulation for the active tracking control which is performed by these delay lines (ø1 and ø2) is such that once initially regulated, regulation need not be repeated, and the injection-locked state of the first mode locked laser diode 140 is maintained while the optical pulse separation device is being operated.

Further, in this embodiment, a symmetric Mach-Zehnder optical switch is employed as an optical switch for performing optical pulse separation; however, provided that this switch is an optical switch in a form controlled by an optical pulse, this optical switch could also be substituted for an optical switch in a different form. That is, so long as an optical switch that has a function allowing the switching operation to be controlled by an optical pulse is provided, as is clear from the description of this embodiment, an optical switch that is a substitute for the symmetric Mach-Zehnder optical switch can be used in this embodiment of the invention. For example, because a four-wave mixing element, a nonlinear Sagnac interferometer switch (NOLM: Nonlinear Optical Loop Mirror), and a SLALOM (Semiconductor Laser Amplifier in a Loop mirror) that employ an optical fiber or a semiconductor possess the function of being able to control the operation of the switch by means of an optical pulse, it is clear that an optical switch that is a substitute for the symmetric Mach-Zehnder optical switch can be used in the implementation of the optical pulse separation method and optical pulse separation device of this invention.

### Optical sampling

The constitution and operation of the optical sampling system 18 (see Fig. 1) will now be described with reference to Fig. 5. The optical sampling system 18 comprises, as main constituent elements, a pre-scalar phase locking circuit 162, a second mode locked laser diode (MLLD) 164, a high nonlinearity optical fiber 172 and an RF (Radio Frequency) spectrum analyzer 180 (hereinafter written simply as 'spectrum analyzer'). The optical sampling system 18 may preferably comprise, as further constituent elements, a first optical amplifier 166, a first optical bandpass filter 167, a polarized wave regulator 170, a second optical bandpass filter 174, a second optical amplifier 176, and a second O/E converter 178. The electrical recovered clock signal 136 supplied from the clock recovery stage 100 is supplied to the pre-scalar phase locking circuit 162.

The pre-scalar phase locking circuit 162 supplies an electrical control pulse 163 to the second mode locked laser diode 164 in response to the electrical recovered clock signal 136. The electrical control pulse 163 is supplied to the second mode locked laser diode 164, whereupon the second mode locked laser diode 164 generates a first optical sampling pulse 165 on the basis of this electrical control pulse 163. The first optical sampling pulse 165 is amplified by the first optical amplifier 166 and then filtered by the first optical bandpass filter 167, whereby the second optical sampling pulse 169 is produced.

Meanwhile, the 160 Gbit/s OTDM signal 24 which has been propagated by the transmission portion 12 is split by the branching filter 20 to produce the 160 Gbit/s OTDM signals 26 and 32, and a first separated signal 26 is supplied to the optical pulse separation device 14, while the other separated signal 32 is supplied to the optical sampling system 18 (See Fig. 1).

Meanwhile, the pre-scalar phase locking circuit 162 also supplies a trigger signal 161 in response to the supplied electrical recovered clock signal 136 to the spectrum analyzer 180. The trigger signal 161 is supplied to the spectrum analyzer 180 to perform optical sampling.

The 160 Gbit/s OTDM signal 32, which is the second separated signal, is supplied to the polarized wave regulator 170 such that the phase of the signal 32 is regulated. The phase-regulated and transmitted OTDM signal 32 is introduced to the high nonlinearity optical fiber 172 after being mixed with the second optical sampling pulse 169 (the mixer is omitted from the drawing). A four wave mixed signal 173 obtained by the four wave mixing which is generated by the high nonlinearity optical fiber 172 is filtered by the second optical bandpass filter 174. The filtered four wave mixed signal is amplified by the second optical amplifier 176, whereby an optical pulse signal 177 which is required for the optical sampling of the 160 Gbit/s OTDM signal 32 is generated. The optical pulse signal 177 is O/E converted by the second O/E converter 178 and then supplied as an electrical signal 179 to the spectrum analyzer 180. Meanwhile, the trigger signal 161 from the pre-scalar phase locking circuit 162 is supplied to the spectrum analyzer 180. The spectrum analyzer 180 receives the trigger signal 161 and the electrical signal 179 and then displays an eye diagram.

In other words, to summarize the above, the optical sampling which is required for the architecture of the optical time division multiplexing device can be implemented by the method indicated below.

One characterizing feature of the above-described clock recovery stage 100 is to be found in the outputting of the electrical recovered clock signal 136 which is to be used in the optical sampling from the clock recovery stage 100. In order for the electrical recovered clock signal 136 to be used in the optical sampling, the electrical recovered clock signal 136 which is recovered by the clock recovery stage 100 is supplied to the pre-scalar phase locking circuit 162, whereby the electrical control pulse 163 supplied to the second mode locked laser diode 164, and the trigger signal 161 supplied to the spectrum analyzer 180 are generated. Optical sampling is performed as a result of the second mode locked laser diode 164 generating the first optical sampling pulse 165 on the basis of the electrical control pulse 163.

### Optical pulse separation method and verification of the operation of the optical time division multiplexing device employing this method.

The optical spectrum of the 160 Gbit/s OTDM data signal is shown in Fig. 6. The optical wavelength of the data signal is plotted on the horizontal axis which is calibrated with 0.5 nm intervals over the range 1544.1 nm to 1549.1 nm. The relative values of the optical intensity are plotted on the vertical axis which is calibrated with 5 dB intervals. Further, the spectrum shown in the diagram inserted in Fig. 6 is the result of the detection of the 10 GHz component contained in the time division multiplexed optical signal by a photodiode with a 30 GHz bandwidth. The horizontal axis of the diagram inserted in Fig. 6 represents the frequency, while the vertical axis represents the intensity on any given scale. It can be seen from Fig. 6 that the ratio of intensity of other splices (with a frequency component different from the required wavelength and indicated by N1 and N2) with respect to the main 160-GHz component peak (indicated by the arrow P1 in the drawing) value is 15 dB or more.

In the case of the spectrum in the diagram inserted in Fig. 6, the peak intensity of the 10 GHz component is -65 dBm, at which time the optical input power to the O/E converter of the 160 Gbit/s OTDM signal is -1.3 dBm. The peak intensity level of the 10 GHz component is not dependent on the PRBS pattern length (bit number of the repetition period of the pseudo random pattern) which is set at 10 Gbit/s. Further, in the clock recovery stage 100 which has the constitution shown in Fig. 4, the phase-locked loop 110 recovers the optical clock pulse 141 as a result of the first mode locked laser diode 140 in Fig. 4 being driven at an adequate electrical signal (RF: Radio Frequency) power level (the power level of the electrical signal 116, substantially 24 dBm).

The spectrum in Fig. 7 for the output signal of the first mode locked laser diode 140 which is thus driven by the electrical recovered clock signal indicates a 1 MHz range for the clock frequency which is centered on 9.95328 GHz. The clock frequency is plotted on the horizontal axis, while the signal intensity is plotted on the vertical axis in dBm units. It can be seen from Fig. 7 upon reading off the peak value (the value at the peak position shown as P2 in the drawing) as -20 dBm and the maximum value of the noise level as -65 dBm that the noise level can be kept at 45 dBm or more. While the system is operating, stable phase locking is implemented by the MLLD.

Figs. 8 (a) and 8 (b) show the bit error rate characteristics of all sixteen tributary channels which are separated by the SMZ 168 based on a back-to-back array (constitution of an evaluation system in which a transmitter and receiver are directly linked). Fig. 8 (a) shows channels 1 to 8, while Fig. 8(b) shows channels 9 to 16. The optical intensity of the received signal is plotted on the horizontal axis which is calibrated in dBm units. The bit error rate (BER) is shown on the vertical axis as a logarithmic scale. The post-reception eye diagram examples (shown by the inserted diagrams displayed as 'Ea' and 'Eb') are shown together with the bit error rate characteristic (the straight line shown as 'base line' in the drawings) for a 10 Gbit/s base line. The received optical intensity is measured by an input section (optical pulse signal 182) of the 10 Gbit/s receiver section 16 (see Fig. 1).

The average interval along the horizontal axis between the base line and the straight line showing the tributary-channel bit error rate may be read off as 5.5 dB. In other words, the requirement for a power penalty (a value that indicates what greater magnitude of received optical power is required with respect to the base line in order to obtain an equal bit error rate) with a 5.5 dB average from the base line is indicated. This is considered to be mainly attributable to degradation of the signal-to-noise ratio that is generated within the SMZ and to fluctuations in the pulse time interval that is generated by the pulsed light source.

Figs. 9(a), 9(b) and 9(c) are eye diagrams which are obtained by 160 Gbit/s optical sampling before (Fig. 9(a)) and after (Fig. 9(b)) transmission over 320 km. For the purpose of a comparison, an eye diagram after transmission in a state where there is no recovered clock signal trigger is shown in Fig. 9(c). The range illustrated is for a one second interval. The eye diagram in Fig. 9 (b) which is the result of observation following transmission over 320 km is obtained by using the recovered clock signal as a trigger. Whereas the eye diagram shown in Fig. 9(b) accurately reflects the shape of the eye diagram prior to transmission shown in Fig. 9(a), the eye diagram shown in Fig. 9(c) is blurred. It is clear from this that the recovered clock acts effectively.

If the method and device of this invention are employed, the clock signal can be extracted without using a special pulse intensity modulator or regulating the optical spectrum so as to intentionally leave behind the clock frequency component. Optical pulse separation can therefore be implemented by means of an SMZ optical switch by using the extracted recovered clock signal. Provided that it is also possible to reduce the bit error rate to the extent that no problem is posed in a practical application, a distinct eye diagram can be obtained for the time division multiplexed optical signal, and hence the method and device of this invention demonstrate a capability that is adequate for practical use.

Further, as is also evident from the embodiment described above, the optical sampling method and optical sampling device that follow also constitute a preferred embodiment.

According to the optical sampling method and optical sampling device described below, optical sampling as required by optical time division multiplexing can be implemented without a complex constitution being required.

In other words, this optical sampling method is an optical sampling method which employs four wave mixing that is generated within a high nonlinearity optical fiber and which comprises the steps of supplying an electrical recovered clock signal recovered by a clock recovery stage to a pre-scalar phase locking circuit, and generating, by means of this pre-scalar phase locking circuit, an electrical control pulse, which is supplied to a second mode locked laser diode, and a trigger signal, which is supplied to a spectrum analyzer and so forth.

Further, the following constitution is feasible in order to implement that above-described optical sampling method. In other words, the optical sampling device comprises a pre-scalar phase locking circuit. When the electrical recovered clock signal recovered by the clock recovery stage is supplied to this pre-scalar phase locking circuit, same generates an electrical control pulse, which is supplied to the second mode locked laser diode, and a trigger signal, which is supplied to the spectrum analyzer.

According to this optical sampling method and optical sampling device, because an electrical recovered clock signal which is generated by the clock recovery stage is used, a device with a complex constitution is not required.

According to this optical sampling method and optical sampling system, the recovered clock signal extracted from the time division multiplexed optical signal by the clock recovery stage is supplied to the pre-scalar phase locking circuit such that the electrical control pulse and trigger signal required for optical sampling are generated and supplied to the spectrum analyzer, whereby observation of the waveform of the time division multiplexed optical signal can be carried out in a straightforward manner.

Also, the optical sampling method preferably also comprises the following steps, namely:
(a) an electrical control pulse is supplied to the second mode locked laser diode such that a first optical sampling pulse is outputted;
(b) this first sampling pulse is amplified by the first optical amplifier;
(c) this amplified first optical sampling pulse is supplied to the first optical bandpass filter and filtered such that a second optical sampling pulse is outputted;
(d) the phase of the time division multiplexed optical signal is regulated by the phase regulating circuit;
(e) the mixed signal produced by mixing this phase-regulated time division multiplexed optical signal and the second optical sampling pulse is inputted to a high nonlinearity optical fiber such that a four wave mixed signal is outputted;
(f) this four wave mixed signal is filtered by the second optical bandpass filter;
(g) the optical signal thus filtered by the second optical bandpass filter is amplified by the second optical amplifier;
(h) the amplified and filtered optical signal is O/E converted by the second O/E converter to generate an electrical signal; and
(i) this electrical signal and the trigger signal are supplied to the spectrum analyzer, whereby optical sampling is performed.

Also, the optical sampling device is preferably constituted as below in order to implement this optical sampling method. That is, the optical sampling device comprises a second mode locked laser diode, an optical amplifier, a second optical bandpass filter, a phase regulating circuit, a high nonlinearity optical fiber, a second optical bandpass filter, a second optical amplifier, a second O/E converter, and a spectrum analyzer.

The second mode locked laser diode receives the electrical control pulse and thus outputs a first optical sampling pulse. The optical amplifier amplifies the first optical sampling pulse. The second optical bandpass filter filters the first optical sampling pulse thus amplified such that a second optical sampling pulse is outputted. The phase locking circuit regulates the phase of the time division multiplexed optical signal. The high nonlinearity optical fiber receives, as an input, a mixed signal produced by mixing the phase-regulated time division multiplexed optical signal and the second optical sampling pulse, and then four-wave mixes the mixed signal such that an optical signal is outputted. The second optical bandpass filter then filters this optical signal. The second optical amplifier amplifies the optical signal which has been filtered by the optical bandpass filter. The second O/E converter O/E converts the optical signal thus amplified and filtered such that an electrical signal is generated. The spectrum analyzer performs optical sampling when supplied with the electrical signal and the trigger signal.

According to the above-described optical sampling method and the optical sampling system, it is possible to generate an optical sampling signal which is O/E converted by the second mode locked laser diode, the optical amplifier, the second optical bandpass filter, the phase regulating circuit, the high nonlinearity optical fiber, the second optical bandpass filter, the second optical amplifier, and the second O/E converter, and this optical sampling signal can be supplied to the spectrum analyzer.

## Claims

1. An optical pulse separation method according to which a plurality of optical pulse signals modulated by different information signals (tributary channels) having the same base modulation rate are time-division multiplexed on a temporal axis, transmitted as a time division multiplexed optical signal, and then received and demodulated for each individual tributary channel on the receiver side by using a recovered clock signal which is extracted from the time division multiplexed optical signal, which is **characterized in** comprising:
(a) obtaining a first electrical signal by optical-to-electrical (O/E) converting the time division multiplexed optical signal in order to extract the recovered clock signal from the time division multiplexed optical signal;
(b) obtaining a second electrical signal from which a clock signal, in which the jitter of the time division multiplexed optical signal is faithfully reproduced, is recovered; and
(c) outputting an electrical recovered clock signal which is phase-locked to a tributary channel, with respect to the second electrical signal.

2. The optical pulse separation method as claimed in claim 1, further comprising:
(d) supplying an electrical recovered clock signal to a first mode locked laser diode (140);
(e) generating an optical recovered clock signal from the first mode locked laser diode in response to this electrical recovered clock signal; and
(f) supplying this optical recovered clock signal to an optical switch (168) as an optical control pulse to separate the time division multiplexed optical signal into tributary-channel optical pulse signals.

3. The optical pulse separation method as claimed in claim 1, further comprising:
(a1) extracting a first electrical signal by using a first O/E converter (106) to receive and O/E convert the time division multiplexed optical signal, and supplying the first electrical signal obtained by this O/E conversion to a first electrical amplifier (108) so that the strength of this first electrical signal is stabilized;
(b1) causing a second electrical signal to be outputted by a phase-locked loop (110) to enable a clock signal, in which the jitter of the time division multiplexed optical signal is faithfully reproduced, to be recovered from the first electrical signal thus amplified;
(c1) supplying the second electrical signal to a tunable electrical phase delay circuit (120) so that the second electrical signal is outputted as an electrical recovered clock signal which is phase-locked to a tributary channel; and
(c2) supplying this electrical recovered clock signal to a second electrical amplifier (122) so that this signal is amplified thereby, filtering the amplified signal by means of an electrical bandpass filter (124) that has a bandwidth whose value, which is derived by dividing the center frequency passed thereby by the half width, is 500 or more, and then outputting this electrical recovered clock signal.

4. The optical pulse separation method as claimed in claim 2, further comprising:
(a1) extracting a first electrical signal by using a first O/E converter to receive and O/E convert the time division multiplexed optical signal, and supplying the first electrical signal obtained by this O/E conversion to a first electrical amplifier so that the strength of this first electrical signal is stabilized;
(b1) causing a second electrical signal to be outputted by a phase-locked loop to enable a clock signal, in which the jitter of the time division multiplexed optical signal is faithfully reproduced, to be recovered from the first electrical signal thus amplified;
(c1) supplying the second electrical signal to a tunable electrical phase delay circuit so that the second electrical signal is outputted as an electrical recovered clock signal which is phase-locked to a tributary channel; and
(c2) supplying this electrical recovered clock signal to a second electrical amplifier so that this signal is amplified thereby, filtering the amplified signal by means of an electrical bandpass filter that has a bandwidth whose value, which is derived by dividing the center frequency passed thereby by the half width, is 500 or more, and then outputting this electrical recovered clock signal.

5. The optical pulse separation method as claimed in claim 2, wherein the optical switch is an optical switch that is controlled by an optical pulse.

6. The optical pulse separation method as claimed in claim 4, wherein the optical switch is an optical switch that is controlled by an optical pulse.

7. An optical pulse separation device including a clock recovery stage (100), and an optical pulse separation stage (101) which is connected to the clock recovery stage, which is **characterized in that**
the clock recovery stage comprises:
a first O/E converter (106);
a first electrical amplifier (108) (output stabilizing electrical amplifier);
a phase-locked loop (110); and
a tunable electrical phase delay circuit (120),
wherein, in order to extract a recovered clock signal from a time division multiplexed optical signal produced by time division multiplexing, on a temporal axis, a plurality of optical pulse signals which are modulated by different information signals (tributary channels) having the same base modulation rate, the first O/E converter O/E converts the time division multiplexed optical signal such that same is extracted as a first electrical signal;
the output stabilizing electrical amplifier stabilizes the strength of the first electrical signal and then supplies same to the phase-locked loop;
the phase-locked loop then generates a second electrical signal from which a clock signal, in which the jitter of the time division multiplexed optical signal is faithfully reproduced, is recovered; and
the tunable electrical phase delay circuit outputs an electrical recovered clock signal, which is phase-locked to a tributary channel, to the optical pulse separation stage at the phase of the second electrical signal.

8. The optical pulse separation device as claimed in claim 7, wherein the optical pulse separation stage comprises:
a first mode locked laser diode (140); and
an optical switch (168),
wherein the first mode locked laser diode receives the electrical recovered clock signal and thereby generates an optical recovered clock signal; and
the optical switch receives this optical recovered clock signal and then separates tributary-channel optical pulse signals from the time division multiplexed optical signal.

9. The optical pulse separation device as claimed in claim 7, further comprising:
an output stabilizing electrical amplifier (108);
a second electrical amplifier (122); and
an electrical bandpass filter (124) that has a bandwidth whose value, which is derived by dividing the center frequency passed thereby by the half width, is 500 or more,
wherein the output stabilizing electrical amplifier stabilizes the strength of the first electrical signal and supplies this signal to the phase-locked loop;
the second electrical amplifier amplifies the second electrical signal and supplies the amplified signal to the electrical bandpass filter; and
the electrical bandpass filter is constituted to receive, filter, and then output the amplified recovered clock signal.

10. The optical pulse separation device as claimed in claim 8, further comprising:
an output stabilizing electrical amplifier;
a second electrical amplifier; and
an electrical bandpass filter that has a bandwidth whose value, which is derived by dividing the center frequency passed thereby by the half width, is 500 or more,
wherein the output stabilizing electrical amplifier stabilizes the strength of the first electrical signal and supplies this signal to the phase-locked loop;
the second electrical amplifier amplifies the second electrical signal and supplies the amplified signal to the electrical bandpass filter; and
the electrical bandpass filter is constituted to receive, filter, and then output the amplified recovered clock signal.

11. The optical pulse separation device as claimed in claim 8, wherein the optical switch is an optical switch that is controlled by an optical pulse.

12. The optical pulse separation device as claimed in claim 10, wherein the optical switch is an optical switch that is controlled by an optical pulse.
